# FASCICULE DE BREVET EUROPEEN

(11) **EP 2 454 154 B1**
(45) Date de publication et mention de la délivrance du brevet: **07.08.2013**
(21) Numéro de dépôt: 10745376.3
(22) Date de dépôt: 29.06.2010
(51) Int. Cl.: B64D 29/00, B64C 3/28, B64D 33/02

(54) **STRUCTURE DE BORD D'ATTAQUE NOTAMMENT POUR ENTREE D'AIR DE NACELLE DE MOTEUR D'AERONEF**
NASENKANTENSTRUKTUR, INSBESONDERE FÜR DEN LUFTEINTRITT EINER FLUGZEUGTRIEBWERKSGONDEL
LEADING EDGE STRUCTURE, IN PARTICULAR FOR THE AIR INTAKE OF THE NACELLE OF AN AIRCRAFT ENGINE

(30) Priorité: 17.07.2009 FR 0903520
(43) Date de publication de la demande: 23.05.2012
(73) Titulaire: Aircelle, 76700 Gonfreville l'Orcher (FR)
(72) Inventeur: BOUILLON, Florent, F-76280 Anglesqueville (FR); RAVAILLER, Frédéric, F-76930 Octeville sur Mer (FR)
(74) Mandataire: Gaillarde, Frédéric F. Ch.
(86) Numéro de dépôt international: PCT/FR2010/051366
(87) Numéro de publication internationale: WO 2011/007074

(56) Documents cités:
- EP-A2- 1 845 018
- US-A- 4 657 615

## Description

La présente invention se rapporte à une structure de bord d'attaque notamment pour entrée d'air de nacelle de moteur d'aéronef.

Comme cela est connu en soi, une nacelle de moteur d'aéronef forme le carénage de ce moteur, et ses fonctions sont multiples : cette nacelle comporte notamment dans sa partie amont une partie appelée couramment « entrée d'air », qui présente une forme générale cylindrique, et dont le rôle est notamment de canaliser l'air extérieur en direction du moteur.

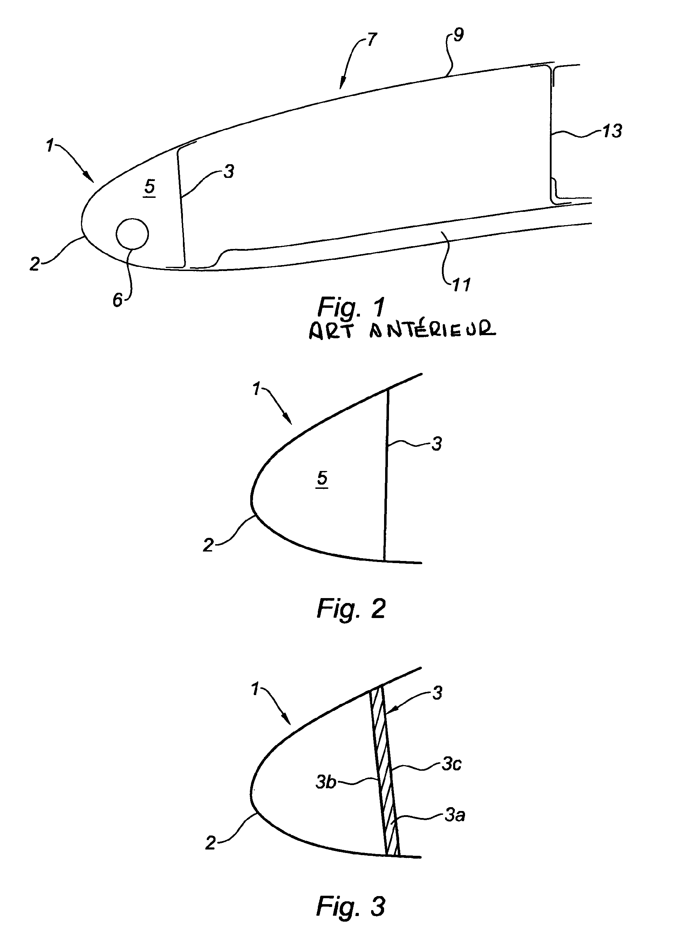

Comme cela est visible sur la figure 1 ci-annexée, où l'on a représenté de manière schématique une moitié d'une telle entrée d'air en coupe longitudinale, cette partie de nacelle comporte, dans sa zone amont, une structure de bord d'attaque 1 comprenant d'une part un bord d'attaque 2 à proprement parler couramment appelé « lèvre d'entrée d'air », et d'autre part une première cloison intérieure 3 définissant un compartiment 5 dans lequel sont en général disposés des moyens 6 de dégivrage.

La lèvre d'entrée d'air 2 est fixée par rivetage à la partie aval 7 de l'entrée d'air, cette partie aval comportant sur sa face extérieure un capot de protection 9 et sur sa face intérieure des moyens d'absorption acoustique 11 couramment désignés par « virole acoustique » ; cette partie aval 7 de l'entrée d'air définit une sorte de caisson fermé par une deuxième cloison 13.

En règle générale, l'ensemble de ces pièces sont formées dans des alliages métalliques, typiquement à base d'aluminium pour la lèvre d'entrée d'air 2 et le capot de protection 9, et à base de titane pour les deux cloisons 3 et 13. Le capot 9 peut également être réalisé en matériau composite.

Une telle entrée d'air classique présente un certain nombre d'inconvénients : son poids est relativement élevé, sa construction nécessite de nombreuses opérations d'assemblage, et la présence de nombreux rivets affecte ses qualités aérodynamiques.

Pour supprimer ces inconvénients, de nombreuses recherches ont été effectuées afin d'utiliser des matériaux composites, en particulier pour la structure de bord d'attaque 1.

Toutefois, ces recherches ont jusqu'alors buté essentiellement sur des problèmes de résistance inhérents à l'utilisation des composites : cette résistance s'est en effet révélée insuffisante notamment en cas d'impact d'outils de maintenance (communément appelés « impacts de services », énergie d'impact de l'ordre de 50 Joules), d'oiseaux (selon la norme CS 25.631 : masse de l'ordre de 1,82 kg (4 livres) frappant la structure à environ 350 noeuds) et de grêle.

Les essais réalisés avec des composites ont de plus mis en évidence des problèmes importants de délaminage et de décollement des différentes couches formant ces composites.

La présente invention a donc notamment pour but de fournir une solution permettant d'utiliser des matériaux composites pour les structures de bords d'attaques d'aéronef, notamment pour les nacelles, qui ne présente pas les inconvénients de la technique antérieure. Un bord d'attaque en matériaux composites est connu de US-4657615, qui montre toutes les caratéristiques du préambule de la revendication 1

On atteint ce but de l'invention avec une structure de bord d'attaque notamment pour entrée d'air de nacelle d'aéronef, comprenant un bord d'attaque et une cloison intérieure définissant un compartiment longitudinal à l'intérieur de ce bord d'attaque, remarquable en ce ledit bord d'attaque et ladite cloison intérieure sont formés en matériaux composites multiaxiaux.

Un matériau composite multiaxial est un composite stratifié, c'est-à-dire comprenant une pluralité de plis uni-dimensionnels (UD - fibres s'étendant selon une seule direction) et/ou bi-dimensionnels (2D - fibres s'étendant selon deux directions), reliés entre eux par des fibres les traversant dans leur épaisseur.

L'utilisation de tels composites multiaxiaux pour former une structure de bord d'attaque confère à celle-ci une excellente résistance vis-à-vis des différents impacts qu'elle peut être amenée à subir, et permet en outre de s'affranchir de tous les problèmes de délaminage et de décollement constatés dans l'état de la technique.

Suivant d'autres caractéristiques optionnelles de la structure de bord d'attaque selon l'invention :
- ledit bord d'attaque est structural et réalisé en matériau composite monolithique multiaxial, et ladite cloison intérieure est structurale et réalisée en matériau composite monolithique multiaxial : par « structural », on entend que l'élément concerné est « porteur », c'est-à-dire qu'il est dimensionné pour conférer la rigidité et la résistance nécessaire à l'ensemble ; par « non structural », on entend que l'élément concerné n'est pas adapté pour assurer cette rigidité et cette résistance, mais est en revanche adapté pour remplir d'autres fonctions (aérodynamique, protection, cloisonnement...) ; par « monolithique », on entend que les différents plis (c'est-à-dire les couches comprenant chacune des fibres noyées dans de la résine)) formant le matériau composite sont acollés les uns aux autres, sans interposition d'âme entre ces plis ;

- ledit bord d'attaque est structural et réalisé en matériau composite monolithique multiaxial, et ladite cloison intérieure est structurale et réalisée en matériau composite sandwich multiaxial : par « sandwich », on signifie qu'une (ou plusieurs) âme (formée par exemple en structure de nid d'abeille ou en mousse) est prise en sandwich entre des plis ou groupes de plis ;
- ledit bord d'attaque est structural et réalisé en matériau composite sandwich multiaxial, et ladite cloison intérieure est structurale et réalisée en matériau composite monolithique multiaxial ;
- ledit bord d'attaque est structural et réalisé en matériau composite sandwich multiaxial, et ladite cloison intérieure est structurale et réalisée en matériau composite sandwich multiaxial ;
- ledit bord d'attaque est structural et réalisé en matériau composite sandwich multiaxial, et ladite cloison intérieure est non structurale et réalisée en matériau composite monolithique multiaxial.
- ledit bord d'attaque est structural et réalisé en matériau composite sandwich multiaxial, et ladite cloison intérieure est non structurale et réalisée en matériau composite sandwich multiaxial.

En variante, on pourra envisager une lèvre non structurale, en matériau composite sandwich ou monolithique, associé à une cloison structurale selon les variantes précédemment évoquées.

Avantageusement, la structure comprend au moins une zone de transition entre une portion en matériau sandwich composite et une portion en matériau composite monolithique, caractérisée en ce que la transition se fait par recouvrement monolithique à tissage multiaxial.

On notera encore qu'avantageusement, le bord d'attaque présente une épaisseur variable le long de son profil, et notamment, par exemple, une épaisseur plus importante au niveau de fortes courbures et moins importante au niveau de ses extrémités.

La présente invention se rapporte également à une entrée d'air, remarquable en ce qu'elle comprend une structure de bord d'attaque conforme à ce qui précède.

La présente invention se rapporte également à une nacelle pour moteur d'aéronef, remarquable en ce qu'elle comprend une entrée d'air conforme à ce qui précède.

D'autres caractéristiques et avantages de la présente invention apparaîtront à la lumière de la description qui va suivre, et à l'examen des figures ci-annexées, dans lesquelles :
- la figure 1 représente de manière schématique une moitié d'entrée d'air en coupe longitudinale de l'art antérieur (voir préambule de la présente description), et
- les figures 2 à 6 représentent cinq modes de réalisation différents de structure de bord d'attaque selon l'invention.

Sur l'ensemble de ces figures, des références identiques ou analogues désignent des organes ou sous-ensembles d'organes identiques ou analogues.

En se reportant à la figure 2, on a représenté une structure de bord d'attaque selon l'invention, destinée en particulier à être intégrée à une entrée d'air de nacelle de moteur d'aéronef.

Comme dans la structure de bord d'attaque de l'art antérieur décrite précédemment, la structure selon l'invention comprend un bord d'attaque 2 à proprement parler, et une cloison longitudinale intérieure 3 définissant un compartiment 5 destiné à accueillir en particulier des organes de dégivrage (non représentés).

De manière remarquable selon l'invention, le bord d'attaque 2 est structural et réalisé en matériau composite monolithique multiaxial, et la cloison intérieure 3 est structurale et réalisée en matériau composite monolithique multiaxial.

Comme expliqué précédemment, ceci signifie que le bord d'attaque 2 a une fonction de structure, en plus d'une fonction aérodynamique. Les efforts sont par ailleurs également repris par la cloison intérieure 3, correctement dimensionnée.

En variante, on notera qu'il es posisble de prévoir un bord d'attaque non structural, ne remplissant alors qu'un rôle aérodynamique, l'essentiel des efforts étant principalement repis par la cloison, structurale.

Le bord d'attaque 2 est formé par une superposition de plis uni-dimensionnels (UD) et/ou bi-dimensionnels (2D), reliés entre eux par des fibres les traversant dans leur épaisseur, ces fibres étant mises en place par couture, tissage ou tressage.

Les fibres disposées à l'intérieur de chaque pli ainsi que celles permettant de solidariser ces plis entre eux peuvent être formées par exemple en verre, en carbone ou en kevlar.

Le procédé de fabrication d'un tel composite monolithique multiaxial consiste à assembler à sec les plis par couture, tissage ou tressage, puis à injecter dans l'ensemble ainsi obtenu de la résine, selon une technique connue en soi d'infusion ou de RTM (Resin Transfer Moulding).

La cloison intérieure 3 est fabriquée selon le même procédé, et est dimensionnée de manière à pouvoir reprendre les efforts en jeu.

Le mode de réalisation de la figure 3 diffère du précédent en ceci que la cloison intérieure 3, qui est là encore structurale, est réalisée en matériau composite sandwich multiaxial.

Ceci signifie que cette cloison intérieure 3 comporte une âme 3a prise en sandwich entre deux groupes de plis 3b et 3c.

L'âme 3a peut être fabriquée en tout matériau présentant un excellent rapport résistance/poids, et notamment en mousse, ou bien en structure de nid d'abeille.

Pour fabriquer cette cloison intérieure 3, selon une première variante, on choisit des matériaux composites monolithiques multiaxiaux pour former chacune des deux couches 3b et 3c, et l'on vient rapporter ces deux couches sur l'âme 3a, et enfin on injecte l'ensemble ainsi obtenu de résine, par procédé de type à infusion ou RTM.

Selon une deuxième variante (non-revendiquée) de fabrication de cette cloison intérieure 3, on choisit des matériaux composites monolithiques stratifiés pour former chacune des deux couches 3b et 3c, on vient ensuite les rapporter de part et d'autre de l'âme 3a, on assemble tous ces éléments par couture, tissage ou tressage, et enfin on vient injecter de résine l'ensemble ainsi obtenu, par infusion ou procédé RTM.

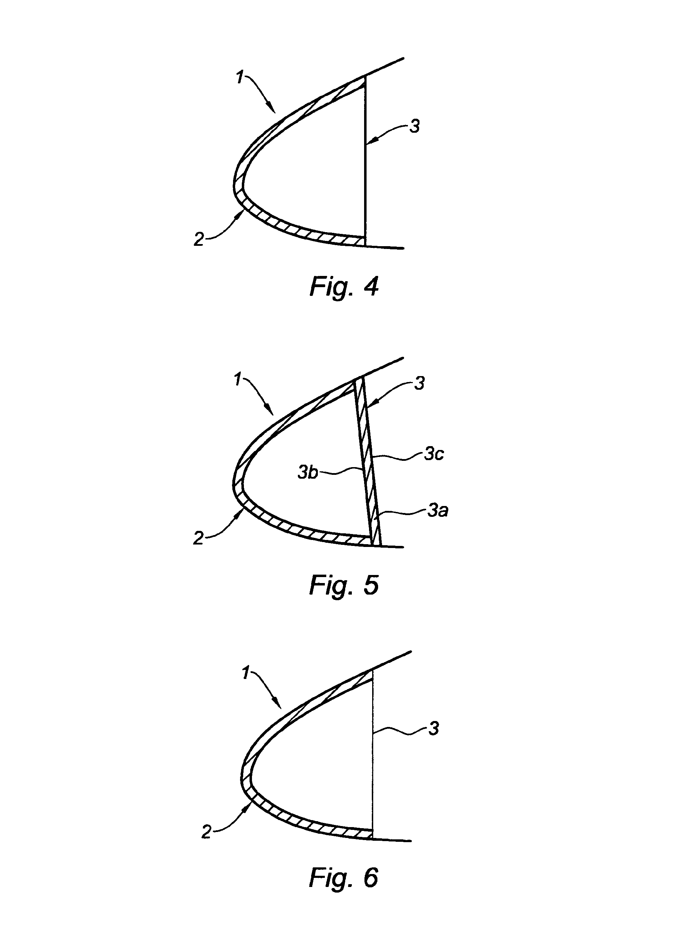

Dans le mode de réalisation de la figure 4, c'est le bord d'attaque 2 qui présente une structure en sandwich analogue à celle de la cloison intérieure 3 du mode de réalisation de la figure 3.

Ce bord d'attaque est dimensionné de manière à assurer la rigidité et la résistance nécessaire de la structure de bord d'attaque 1.

A noter que le bord d'attaque 2 peut être localement monolithique multiaxial.

Dans ce mode de réalisation de la figure 4, la cloison intérieure 3 est quant à elle monolithique structurale, contribuant ainsi à l'excellente rigidité de la structure du bord d'attaque.

Dans le mode de réalisation de la figure 5, la structure du bord d'attaque 2 est identique à celle de la structure du bord d'attaque du mode de réalisation de la figure 4.

La structure de la cloison intérieure 3 est quant à elle identique à celle de la cloison intérieure du mode de réalisation de la figure 3.

Dans ce cas, comme dans le précédent, tant le bord d'attaque que la cloison intérieure remplissent une fonction structurale, ce qui contribue à l'excellente rigidité de la structure du bord d'attaque.

Dans le mode de réalisation de la figure 6, la structure du bord d'attaque 2 est identique à celle des bords d'attaque des figures 4 et 5.

La cloison intérieure 3 est quant à elle formée dans un matériau composite monolithique multiaxial, et ne remplit pas de fonction structurale : cette cloison intérieure 3 a donc pour seule vocation de délimiter le compartiment de dégivrage 5 par rapport au reste de l'entrée d'air.

Dans ce mode de réalisation, la tenue structurale de la structure du bord d'attaque est donc quasi intégralement assurée par le seul bord d'attaque 2.

En d'autres termes, cela signifie que, d'un point de vue structural, on pourrait totalement se passer de la présence de la cloison intérieure 3.

Avantageusement, on notera que si la structure comprend au moins une zone de transition entre une portion en matériau sandwich composite et une portion en matériau composite monolithique, cette transition sera préférentiellement réalisée par recouvrement monolithique à tissage multiaxial.

Bien entendu, la présente invention n'est nullement limitée aux modes de réalisation décrits ci-dessus, et toutes autres combinaisons de matériaux composites multiaxiaux monolithiques et sandwichs pourraient être envisagées.

## Revendications

1. Structure de bord d'attaque (1) notamment pour entrée d'air de nacelle d'aéronef, comprenant un bord d'attaque (2) et une cloison intérieure (3) définissant un compartiment longitudinal (5) à l'intérieur de ce bord d'attaque (2), caractérisée en ce ledit bord d'attaque (2) et ladite cloison intérieure (3) sont formés en matériaux composites multiaxiaux.

2. Structure (1) selon la revendication 1, **caractérisée en ce que** ledit bord d'attaque est structural et réalisé en matériau composite monolithique multiaxial, et **en ce que** ladite cloison intérieure est structurale et réalisée en matériau composite monolithique multiaxial.

3. Structure (1) selon la revendication 1, **caractérisée en ce que** ledit bord d'attaque (2) est structural et réalisé en matériau composite monolithique multiaxial, et **en ce que** ladite cloison intérieure (3) est structurale et réalisée en matériau composite sandwich multiaxial.

4. Structure (1) selon la revendication 1, **caractérisée en ce que** ledit bord d'attaque (2) est structural et réalisé en matériau composite sandwich multiaxial, et **en ce que** ladite cloison intérieure (3) est structurale et réalisée en matériau composite monolithique multiaxial.

5. Structure (1) selon la revendication 1, **caractérisée en ce que** ledit bord d'attaque (2) est structural et réalisé en matériau composite sandwich multiaxial, et **en ce que** ladite cloison intérieure (3) est structurale et réalisée en matériau composite sandwich multiaxial.

6. Structure (1) selon la revendication 1, **caractérisée en ce que** ledit bord d'attaque (2) est structural et réalisé en matériau composite sandwich multiaxial, et **en ce que** ladite cloison intérieure (3) est non structurale et réalisée en matériau composite monolithique multiaxial.

7. Structure (1) selon la revendication 1, **caractérisée en ce que** ledit bord d'attaque (2) est structural et réalisé en matériau composite sandwich multiaxial, et **en ce que** ladite cloison intérieure (3) est non structurale et réalisée en matériau composite sandwich multiaxial.

8. Structure (1) selon l'une quelconque des revendications 1 à 6, **caractérisée en ce qu'**elle comprend au moins une zone de transition entre une portion en matériau sandwich composite et une portion en matériau composite monolithique, **caractérisé en ce que** la transition se fait par recouvrement monolithique à tissage multiaxial.

9. Structure (1) selon l'une quelconque des revendications 1 à 7, **caractérisée en ce que** le bord d'attaque présente une épaisseur variable le long de son profil, et notamment, par exemple, une épaisseur plus importante au niveau de fortes courbures et moins importante au niveau de ses extrémités.

10. Entrée d'air, **caractérisée en ce qu'**elle comprend une structure de bord d'attaque (1) conforme à l'une quelconque des revendications précédentes.

11. Nacelle pour moteur d'aéronef, **caractérisée en ce qu'**elle comprend une entrée d'air conforme à la revendication 10.

## Patentansprüche

1. Eintrittskantenstruktur (1), insbesondere für den Lufteintritt einer Flugzeugtriebwerksgondel,
umfassend eine Eintrittskante (2) und eine innere Trennwand (3), definierend einen länglichen Raum (5) im Inneren dieser Eintrittskante (2), **dadurch gekennzeichnet, dass** diese Eintrittskante (2) und die innere Trennwand (3) aus multiaxialen Verbundmaterialen hergestellt sind.

2. Struktur (1) nach Anspruch 1, **dadurch gekennzeichnet, dass** die Eintrittskante strukturell ist und aus einem multiaxialen monolithischen Verbundmaterial hergestellt ist, und dadurch, dass die innere Trennwand strukturell ist und aus einem multiaxialen monolithischen Verbundmaterial hergestellt ist.

3. Struktur(1) nach Anspruch 1, **dadurch gekennzeichnet, dass** die Eintrittskante (2) strukturell ist und aus einem monolithischen multiaxialen Verbundmaterial hergestellt ist, und dadurch, dass die innere Trennwand (3) strukturell ist und aus einem multiaxialen Sandwich-Verbundmaterial hergestellt ist.

4. Struktur(1) nach Anspruch 1, **dadurch gekennzeichnet, dass** die Eintrittskante (2) strukturell ist und aus einem multiaxialen Sandwich-Verbundmaterial hergestellt ist und dadurch, dass die innere Trennwand (3) strukturell ist und aus einem multiaxialen monolithischen Verbundmaterial hergestellt ist.

5. Struktur(1) nach Anspruch 1, **dadurch gekennzeichnet, dass** die Eintrittskante (2) strukturell ist und aus einem multiaxialen Sandwich-Verbundmaterial hergestellt ist, und dadurch, dass die innere Trennwand (3) strukturell ist und aus einem multiaxialen Sandwich-Verbundmaterial hergestellt ist.

6. Struktur(1) nach Anspruch 1, **dadurch gekennzeichnet, dass** die Eintrittskante (2) strukturell ist und aus einem multiaxialen Sandwich-Verbundmaterial hergestellt ist, und dadurch, dass die innere Trennwand (3) nicht strukturell ist und aus einem multiaxialen monolithischen Verbundmaterial hergestellt ist.

7. Struktur (1) nach Anspruch 1, **dadurch gekennzeichnet, dass** die Eintrittskante (2) strukturell ist und aus einem multiaxialen Sandwich-Verbundmaterial hergestellt ist, und dadurch, dass die innere Trennwand (3) nicht strukturell ist und aus einem multiaxialen Sandwich-Verbundmaterial hergestellt ist.

8. Struktur (1) nach einem der Ansprüche 1 bis 6, **dadurch gekennzeichnet, dass** sie mindestens einen Übergangsbereich zwischen einem Abschnitt aus Sandwich-Verbundmaterial und einem Abschnitt aus monolithischem Verbundmaterial umfasst, **dadurch gekennzeichnet, dass** der Übergang durch die monolithische Bedeckung mit einem multiaxialen Geflecht erfolgt.

9. Struktur (1) nach einem der Ansprüche 1 bis 7, **dadurch gekennzeichnet, dass** die Eintrittskante ein variable Dicke entlang ihrem Profil aufweist, und insbesondere z.B. eine größere Dicke auf der Ebene von engen Krümmungen aufweist und eine geringere auf der Ebene ihrer Enden.

10. Lufteingang, **dadurch gekennzeichnet, dass** er eine Eintrittskantenstruktur (1) nach einem der vorhergehenden Ansprüche umfasst.

11. Flugzeugtriebwerksgondel, **dadurch gekennzeichnet, dass** sie einen Lufteingang nach Anspruch 10 umfasst.

## Claims

1. A leading edge structure (1) in particular for the air intake of an aircraft nacelle, comprising a leading edge (2) and an inner partition (3) defining a longitudinal compartment (5) inside said leading edge (2), **characterized in that** said leading edge (2) and said inner partition (3) are made from a multiaxial composite material.

2. The structure (1) according to claim 1, **characterized in that** said leading edge is structural and made from a multiaxial monolithic composite material, and **in that** said inner partition is structural and made from a multiaxial monolithic composite material.

3. The structure (1) according to claim 1, **characterized in that** said leading edge (2) is structural and made from a multiaxial monolithic composite material, and **in that** said inner partition (3) is structural and made from a multiaxial sandwich composite material.

4. The structure (1) according to claim 1, **characterized in that** said leading edge (2) is structural and made from a multiaxial sandwich composite material, and **in that** said inner partition (3) is structural and made from a multiaxial monolithic composite material.

5. The structure (1) according to claim 1, **characterized in that** said leading edge (2) is structural and made from a multiaxial sandwich composite material, and **in that** said inner partition (3) is structural and made from a multiaxial sandwich composite material.

6. The structure (1) according to claim 1, **characterized in that** said leading edge (2) is structural and made from a multiaxial sandwich composite material, and **in that** said inner partition (3) is non-structural and made from a multiaxial monolithic composite material.

7. The structure (1) according to claim 1, **characterized in that** said leading edge (2) is structural and made from a multiaxial sandwich composite material, and **in that** said inner partition (3) is non-structural and made from a multiaxial sandwich composite material.

8. The structure (1) according to any one of claims 1 to 6, **characterized in that** it comprises at least one transition area between a portion made from a composite sandwich material and the portion made from a monolithic composite material, **characterized in that** the transition is done by monolithic overlapping with multiaxial weaving.

9. The structure (1) according to any one of claims 1 to 7, **characterized in that** the thickness of the leading edge varies along its profile, and in particular, for example, is thicker at the major curves and smaller at its ends.

10. An air intake, **characterized in that** it comprises a leading edge structure (1) according to any one of the preceding claims.

11. A nacelle for an aircraft engine, **characterized in that** it comprises an air intake according to claim 10.
